# EUROPÄISCHE PATENTSCHRIFT

(11) **EP 2 504 738 B1**
(45) Veröffentlichungstag und Bekanntmachung des Hinweises auf die Patenterteilung: **04.11.2015**
(21) Anmeldenummer: 10771100.4
(22) Anmeldetag: 26.10.2010
(51) Int. Cl.: G05B 19/042, G06F 9/48

(54) **PARALLELISIERTE PROGRAMMSTEUERUNG**
PARALLELIZED PROGRAM CONTROL
COMMANDE DE PROGRAMMES EN PARALLÈLE

(30) Priorität: 23.11.2009 DE 102009047024
(43) Veröffentlichungstag der Anmeldung: 03.10.2012
(73) Patentinhaber: Beckhoff Automation GmbH, 33415 Verl (DE)
(72) Erfinder: BARTH, Ramon, 33415 Verl (DE)
(74) Vertreter: Patentanwaltskanzlei WILHELM & BECK
(86) Internationale Anmeldenummer: PCT/EP2010/066172
(87) Internationale Veröffentlichungsnummer: WO 2011/061046

(56) Entgegenhaltungen:
- EP-A2- 1 067 448
- DE-A1- 19 648 422
- JOHN M CALANDRINO ET AL: "LITMUS<R>T : A Testbed for Empirically Comparing Real-Time Multiprocessor Schedulers", REAL-TIME SYSTEMS SYMPOSIUM, 2006. RTSS '06. 27TH IEEE INTERNATIO NAL, IEEE, PI, 1. Dezember 2006 (2006-12-01), Seiten 111-126, XP031031844, ISBN: 978-0-7695-2761-1

## Beschreibung

### Stand der Technik

Die Erfindung betrifft ein Steuerverfahren und ein Verfahren zum Ausführen mehrerer Programme auf mehreren parallel arbeitenden Verarbeitungseinrichtungen.

Steuerungen von Maschinen und Anlagen erfolgen häufig auf der Basis von speicherprogrammierbaren Steuerungen (SPS). Dabei wird üblicherweise ein Mikrocomputer verwendet, um ein Programm auszuführen, welches die Zustände einer Anzahl von mit der Maschine, bzw. Anlage verbundenen Sensoren abfragt, und auf der Basis der bestimmten Zustände eine Anzahl von mit der Maschine bzw. Anlage verbundenen Aktoren ansteuert. Komplexe Maschinen bzw. Anlagen können eine Vielzahl von Sensoren und Aktoren umfassen und hohe Anforderungen an die Leistungsfähigkeit des Mikrocomputers stellen.

Häufig führt der Mikrocomputer zur Steuerung der Maschine bzw. Anlage mehrere Programme parallel aus. Die Programme können miteinander in Wechselwirkung stehen oder unabhängig voneinander sein. Unterschiedliche Programme stellen unterschiedliche Anforderungen an den Mikrocomputer, was beispielsweise eine minimal zu garantierende Reaktionszeit auf eine Statusänderung eines Sensors oder eine Häufigkeit eines Abtastens eines Sensors bzw. Ausgebens eines Aktorwerts anbelangt.

Bis zu einem gewissen Grad kann den gesteigerten Anforderungen an die Steuerung mit einem höher getakteten Mikroprozessor in dem Mikrocomputer begegnet werden. Aufgrund von physikalischen Gegebenheiten lässt sich diese Art der Leistungssteigerung jedoch nicht beliebig fortführen, so dass aktuelle Mikroprozessoren zur Leistungssteigerung vorwiegend darauf bauen, mehrere parallel arbeitende Rechenkerne zu beschäftigen. Verfahren, die in der Vergangenheit dazu verwendet wurden, eine geregelte Abfolge mehrerer Programme zur Steuerung von Maschinen auf nur einem Rechenkern zu steuern, sind nur schlecht geeignet, eine Verteilung von Programmen auf mehrere Rechenkerne durchzuführen.

In der DE 196 48 422 C2 wird vorgeschlagen, mittels einer Zeitscheibensteuerung eine verfügbare Rechenzeit eines Rechenkerns alternierend auf ein echtzeitfähiges Programm zur Steuerung einer solchen Maschine und ein nicht echtzeitfähiges Betriebssystem zu verteilen. Die vorgeschlagene Zeitscheibensteuerung wird durch einen programmierbaren Zeitgeber gesteuert, der im Rechenkern nach Ablauf einer vorbestimmten Zeit eine Unterbrechung (Interrupt, INT) auslöst. Die dem Betriebssystem zugeordnete Rechenzeit kann unabhängig von der dem Steuerprogramm zugeordneten Rechenzeit festgelegt werden.

Aus John M. Calandrino et al., "Litmus RT: A Testbed for Empirically Comparing Real-Time Multiprocessor Schedulers", Real-Time Systems Symposium, 2006, Seiten 111-126 sind ein Steuerverfahren und ein System zum Ausführen von Programmen auf mehreren parallel arbeitenden Verarbeitungseinrichtungen sowie ein Computerprogrammprodukt zur Durchführung dieses Verfahrens bekannt, bei denen jeder Verarbeitungseinrichtung ein Zeitsignalgeber zugeordnet ist, bei dessen Ablauf das Steuerverfahren aus der zugeordneten Verarbeitungseinrichtung ausgeführt wird. Das Steuerverfahren wählt dabei ein zur Ausführung auf der Verarbeitungseinrichtung bereitstehendes Programm aus und startet dann dieses ausgewählte Programm.

Aus der DE 196 48 422 A1 und der EP 1 067 448 A2 sind Steuerverfahren bekannt, bei denen ein nicht echtzeitfähiges Betriebssystem und ein echtzeitfähiges Programm wechselweise ausgeführt werden und sich zu einer Zykluszeit ergänzen.

Der Erfindung liegt die Aufgabe zugrunde, ein Verfahren und ein System anzugeben, um mehrere Programme zur Steuerung einer Maschine auf mehreren parallel arbeitenden Verarbeitungseinrichtungen effizient auszuführen.

### Offenbarung der Erfindung

Die Aufgabe wird gelöst durch ein Steuerverfahren mit den Merkmalen des Anspruchs 1, durch ein Computerprogrammprodukt mit den Merkmalen des Anspruchs 9 und durch ein System mit den Merkmalen des Anspruchs 11. Unteransprüche geben vorteilhafte Ausführungsformen der Erfindung wieder.

Nach einem ersten Aspekt ist jeder von mehreren parallel arbeitenden Verarbeitungseinrichtungen jeweils ein Zeitsignalgeber zugeordnet, bei dessen Ablaufen auf der zugeordneten Verarbeitungseinrichtung ein Steuerverfahren zum Ausführen von Programmen ausgeführt wird. Dabei umfasst das Steuerverfahren Schritte des Auswählens eines zur Ausführung auf der Verarbeitungseinrichtung bereitstehenden Programms, des Setzens des abgelaufenen Zeitsignalgebers auf eine vorbestimmte Zeitdauer und des Startens des ausgewählten Programms auf der Verarbeitungseinrichtung.

Dadurch kann erreicht werden, dass das Steuerverfahren jeweils bei Ablauf einer durch den Zeitsignalgeber gesteuerten Zeitdauer auf derjenigen Verarbeitungseinrichtung aufgerufen wird, auf der ein Wechsel des gerade ausgeführten Programms zu steuern ist. So kann ein gängiger Mikroprozessor mit mehreren Verarbeitungseinrichtungen verwendet werden, bei dem vorgesehen ist, dass ein Programm auf einer der Verarbeitungseinrichtungen des Mikroprozessors nur mittels Steuerbefehlen gestartet werden kann, die auf dieser Verarbeitungseinrichtung ausgeführt werden. Insbesondere Mikroprozessoren der x86-Familie mit mehreren Rechenkernen sind derart aufgebaut und lassen sich vorteilhaft zur Ausführung des Steuerverfahrens verwenden.

Um nach herkömmlichen Verfahren ein Starten eines Programms auf einer ersten Verarbeitungseinrichtung des Mikroprozessors durch ein Steuerprogramm zu steuern, das auf einer zweiten Verarbeitungseinrichtung des Mikroprozessors abläuft, ist ein großer Aufwand zu treiben, der üblicherweise bedingt, dass ein weiteres Steuerprogramm auf der ersten Verarbeitungseinrichtung gestartet wird und die beiden Steuerprogramme miteinander kommunizieren. Durch den damit verbundenen Synchronisierungsaufwand stehen beide Verarbeitungseinrichtungen für eine relativ lange Zeit nicht zur Ausführung anderer Programme des Mikroprozessors zur Verfügung, so dass nicht die gesamte Rechenleistung des Mikroprozessors ausgenützt werden kann.

Das zur Ausführung bereitstehende Programm kann echtzeitfähig sein und zusätzlich kann ein nicht echtzeitfähiges Betriebssystem zur Ausführung auf dem Rechenkern bereitstehen. Bei aufeinanderfolgenden Durchführungen des Steuerverfahrens auf derselben Verarbeitungseinrichtung kann abwechselnd das echtzeitfähige Programm und das nicht echtzeitfähige Betriebssystem ausgewählt werden.

Durch entsprechende Wahl der vorbestimmten Zeitdauern, auf die der Zeitsignalgeber gesetzt wird, kann dem ausgewählten Programm bzw. dem Betriebssystem jeweils eine Zeitdauer zugeteilt werden, während derer die Verarbeitungseinrichtung durch das Programm bzw. das Betriebssystem genutzt werden kann. Dadurch kann beeinflusst werden, in welchen Abständen das Programm aufgerufen wird, wie lange das Programm maximal auf eine Ausführung warten muss und wie viel Rechenzeit dem Programm nach dessen Aufruf zur Verfügung steht. Parallel zur Ausführung des Programms kann das nicht echtzeitfähige Betriebssystem dazu verwendet werden, Standard-Aufgaben durchzuführen, wie beispielsweise eine Ein- bzw. Ausgabe von Daten des Programms an eine Festplatte oder eine Anzeige. Das Betriebssystem bzw. von ihm gesteuerte Programme können auf einem oder mehreren Rechenkernen parallel ablaufen.

Die Zeitdauern können in weiten Grenzen frei eingestellt werden. Die vorbestimmten Zeitdauern des Betriebssystems und des echtzeitfähigen Programms können sich zu einer Zykluszeit ergänzen, welche der Verarbeitungseinrichtung zugeordnet ist. Unterschiedliche Verarbeitungseinrichtungen können unterschiedliche zugeordnete Zykluszeiten aufweisen. Ein Verhältnis, in welchem eine Zykluszeit auf das Betriebssystem und das echtzeitfähige Programm verteilt wird, kann beispielsweise auf der Basis eines Parameters verändert werden. Dieser Parameter kann im laufenden Betrieb der Verarbeitungseinrichtung bzw. des Mikroprozessors veränderbar sein, um veränderliche Lastbedingungen einer durch das Programm gesteuerten Maschine zu berücksichtigen.

Vor dem Setzen des abgelaufenen Zeitsignalgebers auf die bestimmte Zeitdauer kann die vorbestimmte Zeitdauer derart angepasst werden, dass das geplante Ende der Zeitdauer um nicht weniger als eine vorbestimmte Zeitdauer von einem geplanten Ablaufen des Zeitsignalgebers einer anderen Verarbeitungseinrichtung entfernt liegt. Dadurch kann sichergestellt werden, dass das Steuerverfahren nicht auf mehr als einer Verarbeitungseinrichtung zur gleichen Zeit aufgerufen wird. Dies ist besonders vorteilhaft, wenn das Steuerprogramm noch weitere Aufgaben durchführt, die zur Koordination mehrerer Programme auf den mehreren Verarbeitungseinrichtungen erforderlich sind, und die eine Nebenläufigkeit mehrerer Instanzen des Steuerprogramms ausschließen. Solche Aufgaben können beispielsweise ein Zuteilen von gemeinsam genutzten Ressourcen an das Programm bzw. das Betriebssystem oder eine Steuerung von Kommunikation zwischen Programmen umfassen.

Durch das beschriebene Anpassen der vorbestimmten Zeitdauer kann eine Gesamtleistung der Verarbeitungseinrichtungen maximiert werden, indem ein Warten einer Verarbeitungseinrichtung auf eine Ausführung des Steuerprogramms vermieden wird.

Das Anpassen kann durch ein einmaliges Verändern der geplanten Zeitdauer erfolgen; alternativ dazu kann eine vorbestimmte Zeitdauer, die dem Programm zugeordnet ist, verändert werden, so dass sich die Anpassung bei allen folgenden Aufrufen des Programms auswirkt. Die Zykluszeit des zugeordneten Rechenkerns kann dadurch verändert werden, so dass dauerhaft weniger Kollisionen mit den Zyklen einer anderen Verarbeitungseinrichtung erfolgen. Insbesondere Zykluszeiten, deren Enden periodisch kollidieren, können so vermieden werden, wodurch eine Anpassung im Einzelfall weniger wahrscheinlich wird.

In einer weiteren Ausführungsform kann das Steuerverfahren einen vorausgehenden Schritt des Verhinderns weiterer Aufrufe des Steuerverfahrens sowie einen abschließenden Schritt des Ermöglichens weiterer Aufrufe des Steuerverfahrens umfassen. Soll das Steuerverfahren, wie oben beschrieben ist, nicht parallel auf mehreren Verarbeitungseinrichtungen ausgeführt werden, kann durch diese Schritte eine zusätzliche Absicherung gegen Verarbeitungsfehler erfolgen.

Durch die dadurch hergestellte mehrfache Aufrufbarkeit des Steuerprogramms zur gleichen Zeit kann das Steuerverfahren beispielsweise auch auf der Basis von Ereignissen aufgerufen werden, die asynchron zu den Zeitsignalgebern erfolgen, beispielsweise durch einen aktiven Aufruf eines auf einer Verarbeitungseinrichtung ablaufenden Programms.

Jeder Verarbeitungseinrichtung kann eine Liste zugeordnet sein, in die Programme eingetragen sind, die zur Ausführung auf dieser Verarbeitungseinrichtung bereitstehen. Das Auswählen des Programms erfolgt dann unter den Einträgen dieser Liste. Ein einzelnes Programm kann so einer bestimmten Verarbeitungseinrichtung zugeordnet sein. Programme, die bevorzugt parallel zueinander ablaufen sollen, können unterschiedlichen Verarbeitungseinrichtungen zugeordnet werden, während Programme, die bevorzugt sequenziell ausgeführt werden sollen, der gleichen Verarbeitungseinrichtung zugeordnet werden können. Abhängigkeiten zwischen den Programmen, die beispielsweise durch eine durch mehrere Programme gesteuerte Maschine bedingt sind, können auf diese Weise berücksichtigt werden.

Die Zuordnung eines Programms zu einer Verarbeitungseinrichtung kann durch einen Benutzer durchgeführt werden, so dass ein Systemwissen des Benutzers genutzt werden kann; in einer anderen Ausführungsform kann die Zuordnung durch das Steuerprogramm erfolgen, indem das Steuerprogramm beispielsweise eine zurückliegende Auslastung wenigstens einer der Verarbeitungseinrichtungen als Entscheidungsbasis für die Zuordnung verwendet. Mit Hilfe der Zuordnung durch das Steuerprogramm kann eine gleichmäßige Auslastung der Verarbeitungseinrichtungen erzielt werden. Ferner ist es möglich, eine der Verarbeitungseinrichtungen teilweise oder ganz von der Ausführung von Programmen bzw. des Betriebssystems freizustellen, so dass die Verarbeitungseinrichtung in einen Energiesparmodus versetzt werden kann.

Die Einträge der Programme in der Liste können eine Priorität des Programms umfassen und das Auswählen des Programms kann auf der Basis der Priorität erfolgen. So kann es ermöglicht werden, dass ein Programm hoher Priorität ein Programm niedriger Priorität von einem Rechenkern verdrängt. Durch die Beachtung der Prioritäten können Zeitvorgaben einer gesteuerten Maschine eingehalten werden, wodurch Flexibilität und Zuverlässigkeit der Steuerung gesteigert sein können. Da die Listen jeweils nur lokal für den jeweiligen Rechenkern ausgewertet werden, können Programme unterschiedlicher Prioritäten auf unterschiedlichen Rechenkernen gleichzeitig ausgeführt werden.

Das Steuerverfahren kann in Form eines Computerprogrammprodukts auf einem Computersystem ablaufen oder auf einem computerlesbaren Aufzeichnungsmedium abgespeichert sein.

Nach einem zweiten Aspekt umfasst ein System zum Ausführen mehrer Programme mehrere Verarbeitungseinrichtungen, wobei jeder Verarbeitungseinrichtung ein Zeitsignalgeber zugeordnet ist, sowie das oben beschriebene Steuerverfahren. Die Verarbeitungseinrichtungen können von einem integrierten Schaltkreis umfasst sein. Insbesondere können die Verarbeitungseinrichtungen Rechenkerne (Cores) oder virtuelle Rechenkerne, wie sie beispielsweise bei Hyperthreading verwendet werden, umfassen. Dadurch kann von der engen Vernetzung der Verarbeitungseinrichtungen auf dem integrierten Schaltkreis Gebrauch gemacht werden, so dass beispielsweise eine Steuerung einer komplexen technischen Anlage durch eine Vielzahl von miteinander in Verbindung stehenden Programmen effizienter bewerkstelligt werden kann.

Die Zeitsignalgeber können in Form von Zählern implementiert sein, die mit einem Taktsignal betrieben sind, wobei jeder Zähler in der ihm zugeordneten Verarbeitungseinrichtung eine Unterbrechung (Interupt, INT) auslöst, sobald der Zähler einen vorbestimmten Wert erreicht. Insbesondere kann der Zähler abwärts zählen und der vorbestimmte Wert kann Null sein. Derartige Zähler sind in gängigen Mikroprozessoren mit mehreren Verarbeitungseinrichtungen bereits vorgesehen.

Jeder Zähler kann einen programmierbaren Teiler zum Teilen eines für alle Zähler gleichen Systemtakts in ein dem Zähler zugeordnetes Taktsignal umfassen. Dadurch werden alle Zeitdauern von der selben Zeitbasis abgeleitet und stehen in bekannten Verhältnissen zueinander. Durch Wahl des Werts, auf den ein Zähler gesetzt wird, und entsprechendes Programmieren des zugeordneten Teilers kann die Zeitdauer des Zählers in einem weiten Bereich eingestellt werden, so dass sich ein flexibles System zur Bearbeitung von Programmen mit stark unterschiedlichen Anforderungen ergeben kann.

### Kurze Beschreibung der Figuren

Im Folgenden wird die Erfindung mit Bezug auf die beigefügten Figuren genauer beschrieben, in denen:
- Fig. 1: eine schematische Übersicht über eine gesteuerte technische Anlage;
- Fig. 2: eine schematische Darstellung eines Prozessors aus Fig. 1;
- Fig. 3: ein Ablaufdiagramm eines Verfahrens zur Ausführung auf dem Prozessor aus Fig. 2;
- Fig. 4: eine beispielhafte Prozesstabelle für das Verfahren aus Fig. 3 und
- Fig. 5: verschiedene Heuristiken zur Vermeidung von Kollisionen der Enden von gesetzten Zeitdauern auf dem Prozessor aus Fig. 2
zeigen.

### Beschreibung von Ausführungsbeispielen

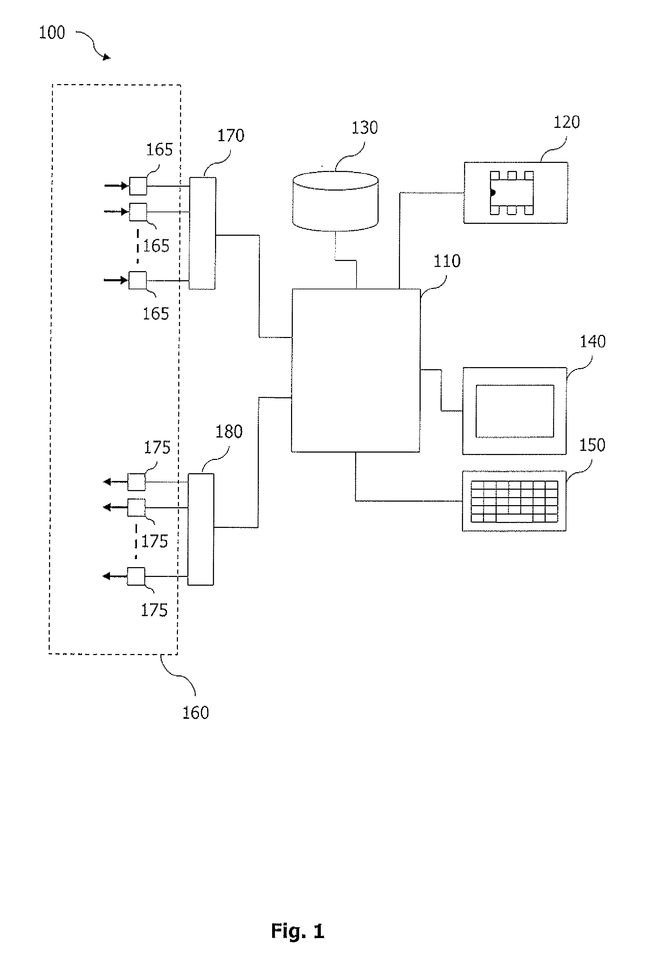

Fig. 1 zeigt eine schematische Übersicht über eine gesteuerte technische Anlage 100. Die gesteuerte technische Anlage 100 umfasst einen Mikrocomputer 110, der auf bekannte Weise mit einem Arbeitsspeicher 120, einem Festspeicher 130, einer Anzeige 140 und einem Eingabegerät 150 verbunden ist. Der Mikrocomputer 110 umfasst üblicherweise wenigstens einen Mikroprozessor (Prozessor, Central Processing Unit, CPU) und diverse zusätzliche Bauteile wie beispielsweise eine Spannungsversorgung und Schnittstellen zum Arbeitsspeicher 120 und dem Festspeicher 130. Die Anzeige 140 und das Eingabegerät 150 sind dazu vorgesehen, einem Benutzer eine Bedienung des Mikrocomputers 110 zu ermöglichen. Eine Bedienung des Mikrocomputers 110 kann optional oder zusätzlich auch mittels eines Zugangs über eine Netzwerk-Schnittstelle und eines daran angeschlossenen weiteren Computersystems erfolgen. In einer Ausführungsform können dementsprechend die Anzeige 140 und das Eingabegerät 150 entfallen..

Eine Produktionsmaschine 160 umfasst eine Vielzahl Sensoren 165, die mit einer Sensorschnittstelle 170 verbunden sind, sowie eine Vielzahl Aktoren 175, die mit einer Aktorschnittstelle 180 verbunden sind. Die Schnittstellen 170 und 180 sind jeweils mit dem Mikrocomputer 110 verbunden. Es kann ein echtzeitfähiges Netzwerk vorgesehen sein, um die Sensoren 165 mit der Sensorschnittstelle 170 bzw. die Aktoren 175 mit der Aktorschnittstelle 180 und/oder die Schnittstellen 170 und 180 mit dem Mikrocomputer 110 zu verbinden, beispielsweise EtherCat.

Die dargestellte Produktionsmaschine 160 steht stellvertretend für eine beliebige Maschine oder Anlage, die mittels des Mikrocomputers 110 gesteuert wird. Die Produktionsmaschine 160 kann beispielsweise eine CNC-Werkzeugmaschine oder ein Walzwerk zur Produktion von Stahlblechen sein. In alternativen Ausführungen können auch weniger als die dargestellten Sensoren 165 und/oder Aktoren 175 umfasst sein. Die Sensoren 165 können analoge und/oder digitale Sensoren sein, beispielsweise in Form von Weg-, Licht-, Temperatur-, Geschwindigkeits-, Schall oder anderen Sensoren. An einer komplexen Produktionsmaschine 160 kann die Zahl der Sensoren 165 mehr als 100 betragen. Die Aktoren 175 können analoge und/oder digitale Aktorwerte umsetzen, beispielsweise in Form von Ventilen, Antrieben, Licht- und Wärmesteuerungen und anderen Aktoren. Eine komplexe Produktionsmaschine 160 kann Aktoren zur Steuerung von 80 Achsen oder mehr umfassen.

Das aus den Komponenten 110-150 gebildete Computersystem tastet die Sensoren 165 ab und steuert in Abhängigkeit von den abgetasteten Werten die Aktoren 175 an. Je nach Beschaffenheit der Produktionsmaschine 160 laufen zur Bestimmung der Ansteuerung der Aktoren 175 eines oder mehrere Programme auf dem Computersystem 110-150 ab.

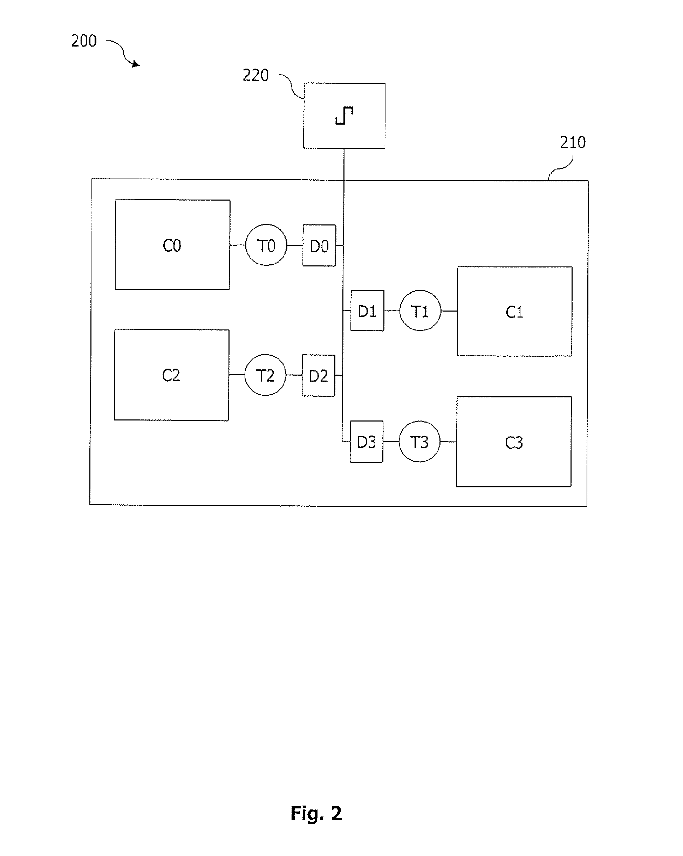

Fig. 2 zeigt eine schematische Darstellung eines Prozessors 200 des Mikrocomputers 110 aus Fig. 1. Der Prozessor 120 umfasst ein Gehäuse 210, in dem vier Rechenkerne (Cores) C0-C3 angeordnet sind. In anderen Ausführungsformen kann eine andere Anzahl Rechenkerne C0-C3 von dem Prozessor 200 umfasst sein, übliche Zahlen von Rechenkernen C0-C3 in einem Prozessor 200 sind 2, 4, 8, 16 oder 32. Eine obere Grenze für Rechenkerne C-0C3 im Prozessor 200 besteht nicht; ferner muss die Zahl der Rechenkerne C0-C3 im Prozessor 200 nicht auf eine Zweierpotenz fallen. Die Rechenkerne C0-C3 können physikalisch im Prozessor 200 implementiert oder durch eine virtuelle Technik wie Hyperthreading bereitgestellt sein. Jeder der Rechenkerne C0-C3 ist jeweils mit einem ihm zugeordneten Zähler T0-T3 verbunden, der wiederum mit einem ihm zugeordneten Teiler D0-D3 verbunden ist. Alle Teiler D0-D3 sind mit einem gemeinsamen Taktgeber 220 verbunden. Der Taktgeber 220 kann sich beispielsweise im Mikrocomputer 110 aus Fig. 1 oder in einer alternativen Ausführungsform auch innerhalb des Gehäuses 210 des Prozessors 200 befinden. In einer bevorzugten Ausführungsform werden Taktsignale, die zur Taktung der Rechenkerne C0-C3 verwendet werden, und das vom Taktgeber 220 bereitgestellte Taktsignal aus einem gemeinsamen Taktsignal bereitgestellt.

Jeder der Rechenkerne C0-C3 kann schreibend und vorzugsweise auch lesend auf den ihm zugeordneten Zähler T0-T3 und Teiler D0-D3 zugreifen. Die Teiler D0-D3 können durch Beschreiben durch den zugeordneten Rechenkern C0-C3 auf einen Divisor programmiert werden, so dass das vom Taktgeber 220 bereitgestellte Taktsignal in seiner Frequenz durch den programmierten Divisor geteilt wird und das resultierende Taktsignal dem jeweiligen Zähler T0-T3 bereitgestellt wird.

Die Zähler T0-T3 sind Abwärtszähler, die bei Erreichen eines Zählerstandes von Null eine Unterbrechung (Interrupt) im zugeordneten Rechenkern C0-C3 auslösen. Ein Zählerstand, von dem aus das Abwärtszählen erfolgt, kann von dem zugeordneten Rechenkern C0-C3 in den Zähler T0-T3 geschrieben werden. In einer bevorzugten Ausführungsform können die Zähler T0-T3 von dem zugeordneten Rechenkern C0-C3 auch angehalten und gestartet werden.

Die Zuordnung der Teiler D0-D3 und Zähler T0-T3 zu den Rechenkernen C0-C3 ist transparent, das heißt, dass ein auf einem der Rechenkerne C1 bis C3 ablaufendes Programm lediglich Zugriff auf den Teiler D0-D3 und den Zähler T0-T3 hat, der dem Rechenkern C0-C3 zugeordnet ist, auf dem das Programm abläuft. Die Programmbefehle zum Zugriff auf den zugeordneten Teiler D0-D3 und Zähler T0-T3 sind für alle Rechenkerne C0-C3 identisch. Ein Zugriff auf einen Teiler D0-D3 oder einen Zähler T0-T3 eines anderen Rechenkerns C0-C3 ist aufgrund der Architektur des Prozessors 200 nicht möglich.

Soll ein beispielsweise auf dem Rechenkern C1 ablaufendes Programm den Zähler T0 beschreiben, der dem Rechenkern C0 zugeordnet ist, so muss das auf dem Rechenkern C1 ablaufende Programm entweder dafür sorgen, dass es den Rechenkern wechselt und auf dem Rechenkern C0 ausgeführt wird, oder das auf dem Rechenkern C1 ablaufende Programm muss ein weiteres, auf dem Rechenkern C0 ablaufendes Programm kontaktieren, damit dieses den gewünschten Zugriff auf den Zähler T0 durchführt.

Erfolgt eine Unterbrechung (Interrupt) auf einem der Rechenkerne C0-C3, so wird auf dem betreffenden Kern C0-C3, beispielsweise durch vorheriges Setzen eines Interrupt-Vektors, ein Steuerprogramm (Scheduler) aufgerufen, welches ein Programm auswählt, welches auf dem betreffenden Rechenkern C0-C3 ausgeführt werden soll. Anschließend setzt das Steuerprogramm den zugeordneten Zähler T0-T3 und/oder den zugeordneten Teiler D0-D3 erneut und startet das ausgewählte Programm. Auf diese Weise wird ein Zeitschreiben-Mechanismus implementiert, der dem ausgewählten Programm nur eine begrenzte Rechenzeit zur Verfügung stellt, bevor eine neuerliche Unterbrechung (Interrupt) das Steuerprogramm erneut aufruft und das Steuerprogramm überprüft, welches Programm im Folgenden weiter ausgeführt werden soll.

Das Steuerprogramm ist das selbe für alle Rechenkerne C0-C3. Im Ergebnis vergibt das Steuerprogramm den Rechenkern C0-C3, der durch seinen ihm zugeordneten Zähler T0-T3 zuletzt unterbrochen wurde, an ein Programm, das zur Ausführung auf diesem Rechenkern C0-C3 bereit steht. So ist ein Zeitscheibenmechanismus implementiert, um mehrere Programme verteilt auf den mehreren Rechenkernen C0-C3 ablaufen zu lassen. Durch das Auswählen eines auszuführenden Programms jeweils lokal auf demjenigen Rechenkern C0-C3, auf dem das Steuerprogramm läuft, wird das Steuerprogramm effektiv auf allen Rechenkernen C0-C3 ausgeführt wodurch bereits eine Lastverteilung von Programmen auf die Rechenkerne C0-C3 erzielt werden kann und ein komplexes Verfahren zur Steuerung aller im Prozessor 200 ablaufenden Programmen durch ein zentrales, auf einem einzigen Rechenkern ablaufendes Steuerprogramm nicht erforderlich ist.

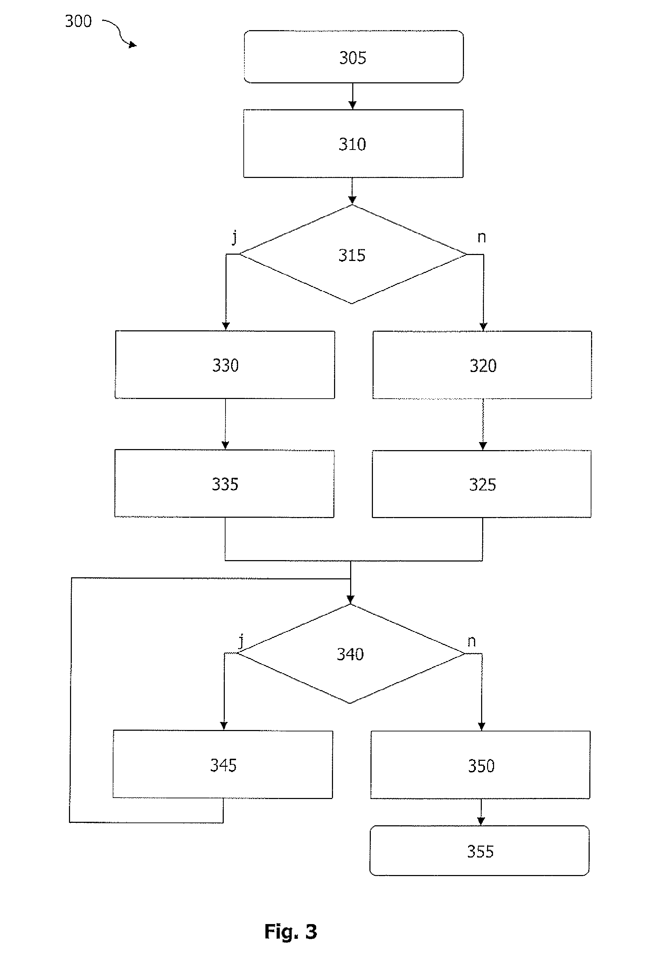

Fig. 3 zeigt ein Ablaufdiagramm eines Verfahrens 300 zur Ausführung auf dem Prozessor 200 aus Fig. 2 im Mikrocomputer 110 aus Fig. 1. Das Verfahren 300 bildet die wesentlichen Schritte des oben mit Bezug auf Fig. 2 beschriebenen Steuerprogramms (Scheduler) ab.

Im ersten Schritt 305 befindet sich das Verfahren 300 im Startzustand. Der Schritt 305 ist der erste vom Verfahren 300 ausgeführte Schritt, nachdem das Verfahren 300, beispielsweise durch eine Unterbrechung (Interrupt) eines der Zähler T0-T3 aus Fig. 2, aufgerufen wurde. In einem folgenden Schritt 310 blockiert das Verfahren 300 zunächst weitere Aufrufe des Verfahrens 300, um zu verhindern, dass auf mehreren der Rechenkerne C0-C3 mehrere Instanzen des Verfahrens 300 parallel ablaufen. Das Blockieren kann beispielsweise mittels eines bekannten Synchronisierungsmechanismus des Prozessors 200 erfolgen, etwa durch einen Semaphor oder ein entsprechendes Register, das dazu vorgesehen ist, konkurrierende Zugriffe der Rechenkerne C0-C3 auf nicht gleichzeitig nutzbare Ressourcen zu koordinieren. Der Schritt 310 ist nur dann erforderlich, wenn das Verfahren 300 über das Zuordnen von Programmen zu Rechenkernen C0-C3 hinaus noch Dienste bereitstellt, die eine parallele Ausführung des Verfahrens 300 verbieten. Zu solchen Diensten kann beispielsweise eine Zuteilung von exklusiv genutzten Ressourcen, wie dem Festspeicher 130, an auf den Rechenkernen C0-C3 ablaufende Programme zählen. Für die bloße Zuteilung eines Programms an einen Rechenkern C0-C3 können unter Umständen mehrere gleichzeitig ablaufende Verfahren 300 auf unterschiedlichen Rechenkernen C0-C3 zugelassen werden und das im Schritt 310 beschriebene Blockieren ist nicht erforderlich.

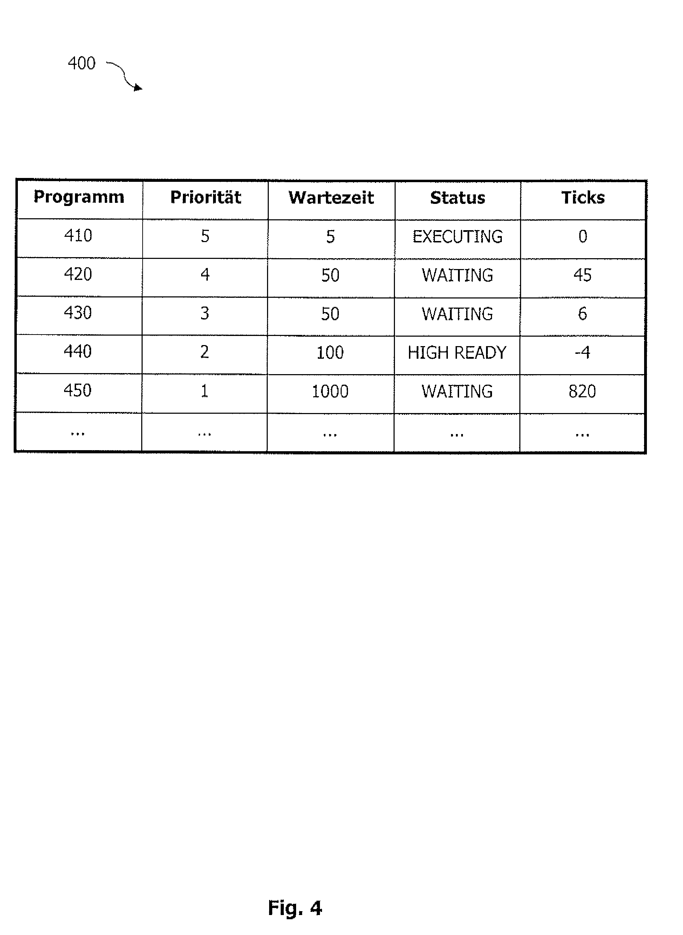

In einem folgenden Schritt 315 wird überprüft, ob auf dem betreffenden Rechenkern C0-C3 als nächstes ein echtzeitfähiges Programm oder ein nicht echtzeitfähiges Betriebssystem ausgeführt werden soll. Das Verfahren 300 ist so ausgelegt, dass bei aufeinanderfolgenden Aufrufen des Verfahrens 300 auf dem selben Rechenkern C0-C3 alternierend das Betriebssystem und ein echtzeitfähiges Programm ausgeführt wird. Soll ein echtzeitfähiges Programm ausgeführt werden, so verzweigt das Verfahren 300 in einen Schritt 320 und wählt aus einer Tabelle, die dem Rechenkern C0-C3 zugeordnet ist, auf dem das Verfahren 300 ausgeführt wird, einen Eintrag aus, der eines von potentiell mehreren zur Ausführung auf dem Rechenkern C0-C3 bereitstehenden Programm repräsentiert, wie unten mit Bezug zu Fig. 4 näher ausgeführt wird.

In einem folgenden Schritt 325 wird bestimmt, welche Zeitdauer dem ausgewählten Programm zur Verfügung gestellt wird, bevor das Verfahren 300 zeitgesteuert erneut aufgerufen wird, um eine erneute Zuteilung eines Programms an den Rechenkern C0-C3 durchzuführen.

Wird im Schritt 315 hingegen bestimmt, dass das Betriebssystem ausgeführt werden soll, so verzweigt das Verfahren 300 zum Schritt 330 und wählt das Betriebssystem als nächstes auszuführendes Programm aus. Das Betriebssystem kann weitere Programme koordinieren, deren Zuordnung zu einem der Rechenkerne C0-C3 nicht durch das Verfahren 300 gesteuert wird, sondern durch das Betriebssystem selbst. Solche vom Betriebssystem abhängigen Programme laufen innerhalb der Zeit ab, die dem Betriebssystem durch das Steuerprogramm des Verfahrens 300 bereitgestellt wird. Analog zum oben beschriebenen Schritt 325 wird im folgenden Schritt 335 bestimmt, welche Zeitdauer dem Betriebssystem zur Ausführung zugeordnet ist.

Nach Durchführung des Schritts 325 bzw. 335 fährt das Verfahren mit einem Schritt 340 fort, in welchem überprüft wird, ob ein Ende der bestimmten Zeitdauer mit einem Ende einer anderen Zeitdauer kollidiert, auf die einer der Zeitgeber T0-T3 programmiert ist. Hierfür können Ablaufzeiten aller Zähler T0-T3 in einem Speicherbereich hinterlegt sein, auf den von jedem der Rechenkerne C0-C3 aus zugegriffen werden kann. Eine Kollision der Enden von Zeitdauern bedeutet in diesem Zusammenhang, dass das Ende der in einem der Schritte 325 oder 335 bestimmten Zeitdauer näher als ein vorbestimmtes Maß an einem Zeitpunkt liegt, zu dem einer der Zeitgeber T0-T3 abläuft und zu dem ein Aufruf des Verfahrens 300 erfolgt. Dieses vorbestimmte Maß ist mindestens so groß wie eine Zeit, die das Verfahren 300 üblicherweise zur einmaligen Ausführung benötigt.

Wird im Schritt 340 eine Kollision des Endes der vorbestimmten Zeitdauer mit dem Ende einer anderen Zeitdauer festgestellt, so wird in einem Schritt 345 die vorbestimmte Zeitdauer angepasst. Dazu kann die vorbestimmte Zeitdauer um einen vorbestimmten Betrag vergrößert oder verkleinert werden. Die im Schritt 345 verwendete Heuristik zum Anpassen der vorbestimmten Zeitdauer kann auch eine Periodizität der Zeitpunkte, zu denen die Zähler T0-T3 Unterbrechungen auslösen, berücksichtigen. In einer Ausführungsform werden die Schritte 340 und 345 so oft durchlaufen, bis eine Anpassung der Zeitdauer erfolgt ist, die eine Kollisionsfreiheit sicher stellt. Übliche Schutzmaßnahmen zur Verhinderung einer Endlosschleife über die Schritte 340 und 345 können verwendet werden.

In einem Schritt 350 wird der Zähler T0-T3, der dem Rechenkern C0-C3 zugeordnet ist, auf dem das Verfahren 300 abläuft, auf einen Wert gesetzt, der der vorbestimmten Zeitdauer entspricht.

Schließlich wird in einem Schritt 355 die im Schritt 310 gesetzte Blockade entfernt, so dass weitere Aufrufe des Verfahrens 300 möglich sind, und das in einem der Schritte 320 oder 330 ausgewählte Programm oder Betriebssystem gestartet. Vorzugsweise erfolgen diese beiden Aktionen unteilbar in einem einzigen Schritt, so dass das Verfahren 300 nicht erneut gestartet wird, bevor das ausgewählte Programm bzw. das Betriebssystem auf dem Rechenkern C0-C3 gestartet ist.

Fig. 4 zeigt eine beispielhafte Prozesstabelle 400 zur Verwendung mit dem Verfahren 300 aus Fig. 3. Jedem der Rechenkerne C0-C3 aus Fig. 2 ist eine individuelle Prozesstabelle 400 zugeordnet. Durch Eintragen eines Programms 410-450 in die Prozesstabelle 400 erfolgt eine Zuordnung des Programms 410-450 zu dem jeweiligen Rechenkern C0-C3.

In der Tabelle 400 sind Programme 410 bis 450 eingetragen. Jedem eingetragenen Programm 410-450 ist eine Priorität, eine Wartezeit, ein Status und eine Anzahl von Ticks zugeordnet. Die Priorität gibt an, mit welcher Dringlichkeit das Programm 410-450 ausgeführt werden soll, wobei eine hohe Priorität einer hohen Dringlichkeit entspricht. Von mehreren zur Ausführung bereitstehenden Programmen 410-450 wird durch das Steuerprogramm des Verfahrens 300 das Programm 410-450 ausgewählt, das die höchste Priorität aufweist. Die Wartezeit des Programms 410-450 gibt an, wie viel Zeit zwischen aufeinander folgenden Aufrufen des Programms 410-450 vergehen soll. Die Wartezeit wird üblicherweise in Einheiten eines für den Rechenkern C0-C3 einstellbaren Systemtakts angegeben, wobei der Systemtakt beispielsweise zwischen 10µs und 100 ms, bevorzugt zwischen 100 µs und 1 ms betragen kann. In einer Ausführungsform wird der Systemtakt auf die kürzeste Wartezeit aller in der Tabelle 400 eingetragenen Programme 410-450 gesetzt. Weiterhin kann vorgesehen sein, den Systemtakt mit einem anderen Takt zu synchronisieren, um beispielsweise eine Kommunikation mit einer anderen Verarbeitungssystem, das mit der Produktionsmaschine 160 aus Fig. 1 integriert sein kann, zu erleichtern. So können im Rahmen der technischen Anlage 100 mehrere verteilte Taktgeber bzw. Uhren vorgesehen sein, die Zeitbasen für unterschiedliche Steuerprozesse bereitstellen. Die Synchronisation kann beispielsweise durch Einschieben von Wartezyklen erfolgen.

Der Status eines Programms 410-450 gibt an, ob das Programm 410-450 zur Ausführung bereitsteht, wartet oder gerade ausgeführt wird. Ist der Status eines Programms 410-450 HIGH READY, so hat es lange genug auf einer Ausführung gewartet und steht zur Ausführung bereit. Erfordert das Programm 410-450 keine Rechenzeit und wartet seinen nächsten Aufruf ab, so ist der Status WAITING. Wird das Programm 410-450 ausgeführt, so ist sein Status EXECUTING. Die Anzahl der Ticks jedes Programms 410-450 wird mit jedem Systemtakt um Eins verringert.

Erreicht die Zahl der Ticks eines Programms 410-450 Null, so wird der Status des Programms 410-450 auf HIGH READY gesetzt. Die Ticks werden jedoch weiter gezählt, bis das Programm 410-450 durch das Steuerprogramm des Verfahrens 300 auf Fig. 3 zur Ausführung ausgewählt wird. Dann wird der Status des Programms 410-450 auf EXECUTING gesetzt und die Anzahl der Ticks des Programms 410-450 auf seine Wartezeit gesetzt.

Eine Statusänderung eines Programms 410-450 von WAITING auf HIGH READY hat somit nicht unmittelbar ein Ausführen des Programms 410-450 auf einem der Rechenkerne C0-C3 auf Fig. 2 zur Folge. Stattdessen signalisiert der Status des Programms 410-450 dessen Ausführbarkeit, und beim nächsten Aufruf des Steuerprogramms des Verfahrens 300 gelangt dasjenige Programm 410-450 zur Ausführung, dessen Status HIGH READY ist und das gleichzeitig die höchste Priorität hat.

Hat das ausgeführte Programm 410-450 seine Aufgabe erledigt und benötigt bis zu seinem nächsten Aufruf keine weitere Rechenzeit, so ruft das Programm 410-450 das Steuerprogramm des Verfahrens 300 aus Fig. 3 auf. Der Status des Programms 410-450 in der Prozesstabelle 400 wird von EXECUTING auf WAITING gesetzt.

In einer Ausführungsform erfolgt eine Zuordnung eines Programms 410-450 zu einer Tabelle 400 bzw. zu einem Rechenkern C0-C3 durch das Steuerprogramm des Verfahrens 300. Das Steuerprogramm protokolliert bei jedem Aufruf, welches Programm 410-450 wann ausgewählt wird. Kann kein Programm 410-450 ausgewählt werden, weil keines zur Ausführung bereit steht, so wird eine Leerlaufzeit des Rechenkerns protokolliert. Aus den protokollierten Zeiten des Arbeitens und der Leerlaufzeiten bestimmt das Steuerprogramm eine Auslastung des Rechenkerns und weist im Bedarfsfall ein Programm 410-450 einem Rechenkern C0-C3 zu, dessen Auslastung niedriger als die anderer Rechenkerne C0-C3 war.

Die Zuordnung kann auch derart erfolgen, dass eine minimale Anzahl Rechenkerne C0-C3 eine möglichst hohe Auslastung aufweisen, so dass verbleibende Rechenkerne C0-C3 nicht oder nur wenig benutzt werden und in einen stromsparenden Modus versetzt werden können.

In einer weiteren Ausführungsform erfolgt eine Zuordnung eines Programms 410-450 zu einer Tabelle bzw. zu einem Rechenkern C0-C3 manuell durch einen Benutzer des Mikrocomputers 110. Das Steuerprogramm des Verfahrens 300 kann, wie oben ausgeführt, trotzdem entsprechende Protokolleinträge sammeln, auf deren Basis der Benutzer die Zuordnung treffen kann. Eine Aufbereitung der protokollierten Daten, beispielsweise in Listenform oder graphisch, kann hierfür unterstützend erfolgen. In einer Variante werden Auslastungsgrade mehrerer Rechenkerne C0-C3 dem Benutzer als zeitliche Verläufe dargestellt, gegebenenfalls zusammen mit durchschnittlichen Auslastungsgraden der Rechenkerne C0-C3. Eine Zuordnung eines Programms 410-450 zu einer Tabelle 400 bzw. zu einem Rechenkern C0-C3 kann im laufenden Betrieb des Mikrocomputers 110 auf Fig. 1 geändert werden, so dass eine Anpassung an veränderliche Bedingungen oder Anforderungen des Mikrocomputers 110 möglich ist.

Beide Ansätze können auch nebeneinander durchgeführt werden, indem beispielsweise einige Programme 410-450 manuell durch einen Benutzer und andere Programme 410-450 automatisch durch das Steuerprogramm des Verfahrens 300 einer Tabelle 400 bzw. einem Rechenkern C0-C3 zugeordnet werden.

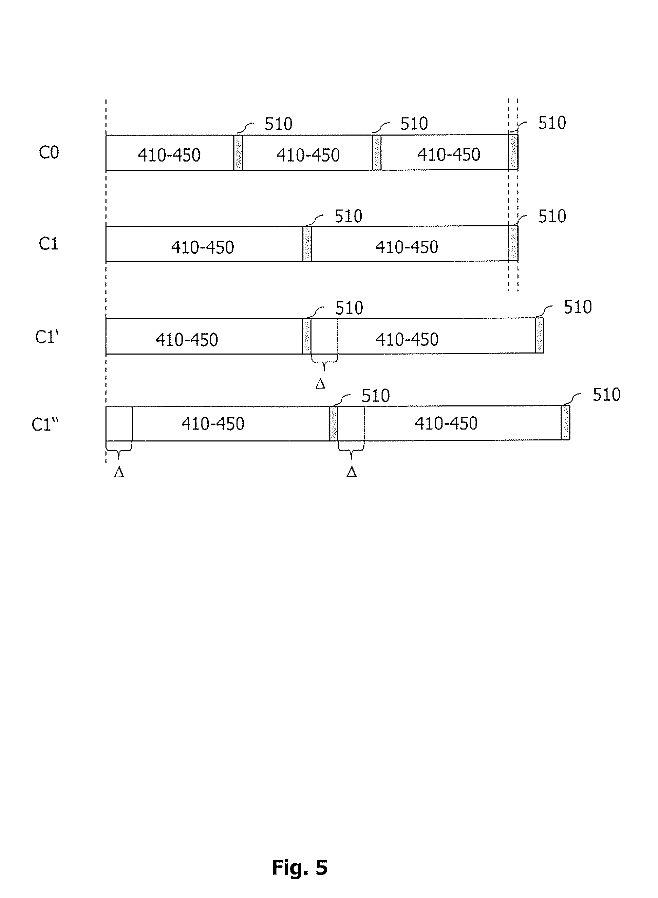

Fig. 5 zeigt verschiedene Heuristiken zur Vermeidung von Kollisionen der Enden gesetzter Zeitdauern auf dem Prozessor 200 aus Fig. 2. In horizontaler Richtung ist ein Zeitverlauf angetragen. Vertikal sind in vier Zeilen Ausführungsreihenfolgen eines Programms 410-450 und eines Betriebssystems 510 auf einem der beispielhaften Rechenkerne C0 oder C1 angegeben. Dunkle Flächen repräsentieren eine Ausführung des Betriebssystems, helle Flächen eine Ausführung eines echtzeitfähigen Programms 410-450.

Bei jedem Wechsel zwischen einer hellen und einer dunklen Fläche erfolgt ein Aufruf des Steuerprogramms des Verfahrens 300 aus Fig. 3. Im Vergleich zu den Zeiten, die das Betriebssystem und das echtzeitfähige Programm 410-450 auf dem jeweiligen Rechenkern C0-C3 verwenden, sind die Ausführungszeiten des Verfahrens 300 so gering, dass sie in der Darstellung in Fig. 5 nicht angegeben sind.

In der ersten Zeile ist eine Abfolge von Ausführungen des Betriebssystems und eines echtzeitfähigen Programms 410-450 auf den Rechenkern C0 dargestellt. In der zweiten Zeile ist eine entsprechende Abfolge von Ausführungen des Betriebssystems und eines echtzeitfähigen Programms 410-450 auf den Rechenkern C1 dargestellt. An den gestrichelten vertikalen Linien, welche die beiden Zeilen miteinander verbinden, kollidieren Aufrufe des Verfahrens 300 auf den Rechenkernen C0 und C1 miteinander.

In der dritten Zeile ist der Ablauf der zweiten Zeile um einen Betrag entlang der Zeitachse verschoben. Diese Verschiebung ergibt sich dadurch, dass die dem Programm 410-450 zugeordnete Zeitdauer um eine vorbestimmte Zeit Δ verlängert wird, um eine Kollision am rechten Ende der Darstellung in Fig. 5 zu vermeiden (gestrichelte vertikale Linien). Das Einfügen der Zeit Δ erfolgt nur einmalig.

In der vierten Zeile ist eine alternative Herangehensweise zur Vermeidung von Kollisionen skizziert. Hier wird eine Verlängerung der dem Programm 410-450 zugeordneten Zeitdauer um die Zeit Δ bei jedem Ablauf der dem Programm 410-450 zugeordneten Zeitdauer vorgenommen.

Die Heuristik zur Vermeidung von Kollisionen nach der dritten Zeile erscheint einfacher, da nur der nächste Aufruf des Verfahrens 300 auf dem anderen Rechenkern C0 betrachtet wird.

Die Vorgehensweise nach der vierten Zeile hat den Vorteil, dass die Zykluszeiten, die sich jeweils als Summe der dem Betriebssystem zugeordneten Zeitdauer und der dem Programm 410-450 zugeordneten Zeitdauer ergeben, gegeneinander verstimmt werden können.

Je nachdem, in welchem Verhältnis die Zykluszeiten der Abläufe der ersten und der zweiten Zeile zueinander stehen, kann die Herangehensweise der dritten oder vierten Zeile gewählt werden, um zeitliche Kollisionen des Verfahrens 300 auf den Kernen C0 und C1 zu vermeiden. Eine Kombination beider Heuristiken ist ebenfalls möglich, beispielsweise indem die Zykluszeiten durch ein erstes Anpassen linear abhängig gemacht werden und in einem zweiten Anpassen einmalig gegeneinander verschoben werden.

## Patentansprüche

1. Steuerverfahren (300) zum Ausführen von Programmen (410-450) auf mehreren parallel arbeitenden Verarbeitungseinrichtungen (C0-C3), wobei jeder Verarbeitungseinrichtung (C0-C3) ein Zeitsignalgeber (220, D0-D3, T0-T3) zugeordnet ist, bei dessen Ablaufen das Steuerverfahren (300) auf der zugeordneten Verarbeitungseinrichtung (C0-C3) ausgeführt wird, wobei das Steuerverfahren (300) folgende Schritte umfasst:
- Auswählen (320, 330) eines zur Ausführung auf der Verarbeitungseinrichtung (C0-C3) bereit stehenden Programms (410-450) und Bestimmen (325, 335), welche Zeitdauer dem ausgewählten Programm zur Ausführung zugeordnet ist;
- Vergleichen (340), ob ein Ende der vorbestimmten Zeitdauer weniger als eine vorbestimmte Zeitdauer von einem geplanten Ablaufen eines einer anderen Verarbeitungseinrichtung (C0-C3) zugeordneten Zeitsignalgebers (220, D0-D3, T0-T3) entfernt liegt und Verändern (345) der vorbestimmten Zeitdauer, falls das der Fall ist;
- Setzen (350) des abgelaufenen Zeitsignalgebers (220, D0-D3, T0-T3) auf die vorbestimmte Zeitdauer und
- Starten (355) des ausgewählten Programms (410-450) auf der Verarbeitungseinrichtung (C0-C3).

2. Steuerverfahren (300) nach Anspruch 1, wobei das zur Ausführung bereit stehende Programm (410-450) echtzeitfähig ist und zusätzlich ein nicht echtzeitfähiges Betriebssystem (510) zur Ausführung bereitsteht und wobei an aufeinander folgenden Durchführungen des Steuerverfahrens(300) auf der selben Verarbeitungseinrichtung (C0-C3) abwechselnd das echtzeitfähige Programm (410-450) und das nicht echtzeitfähige Betriebssystem (510) ausgewählt wird.

3. Steuerverfahren (300) nach Anspruch 2, wobei sich die vorbestimmten Zeitdauern des Betriebssystems (510) und des echtzeitfähigen Programms (410-450) zu einer Zykluszeit ergänzen, welcher der Verarbeitungseinrichtung (C0-C3) zugeordnet ist.

4. Steuerverfahren (300) nach einem der Ansprüche 1 bis 3, wobei das Verändern der vorbestimmten Zeitdauer, wenn ein Ende der vorbestimmten Zeitdauer weniger als eine vorbestimmte Zeitdauer von einem geplanten Ablaufen eines einer anderen Verarbeitungseinrichtung (C0-C3) zugeordneten Zeitsignalgebers (220, D0-D3, T0-T3) entfernt liegt, ein Verschieben um einen festen Betrag (Δ) umfasst.

5. Steuerverfahren (300) nach einem der vorangehenden Ansprüche, ferner umfassend einen vorausgehenden Schritt des Verhinderns (310) weiterer Aufrufe des Steuerverfahrens (300) und einen abschließenden Schritt des Ermöglichens (355) weiterer Aufrufe des Steuerverfahrens(300).

6. Steuerverfahren (300) nach einem der vorangehenden Ansprüche, wobei jeder Verarbeitungseinrichtung (C0-C3) eine Liste (400) zugeordnet ist, in die Programme (410-450) eingetragen sind, die dieser Verarbeitungseinrichtung (C0-C3) zugeordnet sind, und wobei das Auswählen (320) unter den Einträgen der Liste (400) erfolgt.

7. Steuerverfahren (300) nach Anspruch 6, wobei jeder Eintrag eine Priorität umfasst und das Auswählen (320) in Abhängigkeit der Prioritäten erfolgt.

8. Steuerverfahren (300) nach Anspruch 7, ferner umfassend den Schritt des Eintragens eines Programms (410-450) in eine der Listen (400) auf der Basis einer zurückliegenden Auslastung wenigstens einer der Verarbeitungseinrichtungen (C0-C3).

9. Computerprogrammprodukt mit Programmcodemitteln zum Durchführen des Steuerverfahrens(300) nach einem der vorangehenden Ansprüche, wenn das Computerprogrammprodukt auf einem Computersystem (110-150) abläuft.

10. Computerprogrammprodukt nach dem Anspruch 9, wenn es auf einem computerlesbaren Aufzeichnungsmedium abgespeichert ist.

11. System zum Ausführen mehrerer Programme (410-450) auf mehreren Verarbeitungseinrichtungen (C0-C3), wobei das System folgendes umfasst:
- mehrere Verarbeitungseinrichtungen (C0-C3), wobei jeder Verarbeitungseinrichtung (C0-C3) ein Zeitsignalgeber (220, D0-D3, T0-T3) zugeordnet ist;
- ein Steuerverfahren (300) nach einem der vorangehenden Ansprüche, das auf einer der Verarbeitungseinrichtungen (C0-C3) ausgeführt wird.

12. System nach Anspruch 11, wobei die Verarbeitungseinrichtungen (C0-C3) von einem integrierten Schaltkreis (200) umfasst sind.

13. System nach Anspruch 11 oder 12, wobei die Zeitsignalgeber (220, D0-D3, T0-T3) Zähler (T0-T3) umfassen, die mit einem Taktsignal betrieben sind, wobei jeder Zähler (TOT3) in der ihm zugeordneten Verarbeitungseinrichtung (C0-C3) eine Unterbrechung auslöst, sobald der Zähler (T0-T3) einen vorbestimmten Wert erreicht.

14. System nach Anspruch 13, wobei jeder Zähler einen programmierbaren Teiler (D0-D3) zum Teilen eines allen Teilern gemeinsamen Taktsignals in jeweils ein einem Zähler (T0-T3) zugeordnetes Taktsignal umfasst.

## Claims

1. Control method (300) for executing programs (410-450) on a plurality of processing devices (C0-C3) operating in parallel, wherein each processing device (C0-C3) is assigned a time signal generator (220, D0-D3, T0-T3), upon the expiry of which the control method (300) is executed on the assigned processing device (C0-C3), wherein the control method (300) comprises the following steps:
- selecting (320, 330) a program (410-450) ready for execution on the processing device (C0-C3), and determining (325, 335) which time duration is assigned to the selected program for execution;
- comparing (340) whether an end of the predetermined time duration is less than a predetermined time duration away from a planned expiry of a time signal generator (220, D0-D3, T0-T3) assigned to a different processing device (C0-C3), and changing (345) the predetermined time duration if that is the case;
- setting (350) the expired time signal generator (220, D0-D3, T0-T3) to the predetermined time duration, and
- starting (355) the selected program (410-450) on the processing device (C0-C3).

2. Control method (300) according to Claim 1, wherein the program (410-450) ready for execution has real-time capability and an operating system (510) not having real-time capability is additionally ready for execution, and wherein the program (410-450) having real-time capability and the operating system (510) not having real-time capability are selected alternately on successive performances of the control method (300) on the same processing device (C0-C3).

3. Control method (300) according to Claim 2, wherein the predetermined time durations of the operating system (510) and of the program (410-450) having real-time capability complement one another to form a cycle time assigned to the processing device (C0-C3).

4. Control method (300) according to any of Claims 1 to 3, wherein changing the predetermined time duration if an end of the predetermined time duration is less than a predetermined time duration away from a planned expiry of a time signal generator (220, D0-D3, T0-T3) assigned to a different processing device (C0-C3) comprises shifting by a fixed absolute value (Δ).

5. Control method (300) according to any of the preceding claims, furthermore comprising a preceding step of preventing (310) further calls of the control method (300) and a concluding step of enabling (355) further calls of the control method (300).

6. Control method (300) according to any of the preceding claims, wherein each processing device (C0-C3) is assigned a list (400) into which are entered programs (410-450) assigned to said processing device (C0-C3), and wherein selecting (320) is carried out among the entries in the list (400).

7. Control method (300) according to Claim 6, wherein each entry comprises a priority and selecting (320) is carried out depending on the priorities.

8. Control method (300) according to Claim 7, furthermore comprising the step of entering a program (410-450) into one of the lists (400) on the basis of a past capacity utilization of at least one of the processing devices (C0-C3).

9. Computer program product comprising program code means for performing the control method (300) according to any of the preceding claims if the computer program product runs on a computer system (110-150).

10. Computer program product according to Claim 9 if it is stored on a computer-readable recording medium.

11. System for executing a plurality of programs (410-450) on a plurality of processing devices (C0-C3), wherein the system comprises the following:
- a plurality of processing devices (C0-C3), wherein each processing device (C0-C3) is assigned a time signal generator (220, D0-D3, T0-T3);
- a control method (300) according to any of the preceding claims, which is executed on one of the processing devices (C0-C3).

12. System according to Claim 11, wherein the processing devices (C0-C3) are comprised by an integrated circuit (200).

13. System according to Claim 11 or 12, wherein the time signal generators (220, D0-D3, T0-T3) comprise counters (T0-T3) operated with a clock signal, wherein each counter (T0-T3) triggers an interrupt in the processing device (C0-C3) assigned to it as soon as the counter (T0-T3) reaches a predetermined value.

14. System according to Claim 13, wherein each counter comprises a programmable divider (D0-D3) for dividing a clock signal common to all the dividers into a respective clock signal assigned to a counter (T0-T3).

## Revendications

1. Procédé de commande (300) destiné à exécuter des programmes (410-450) sur une pluralité de dispositifs de traitement fonctionnant en parallèle (C0-C3), dans lequel à chaque dispositif de traitement (C0-C3) est associé un temporisateur (220, D0-D3, T0-T3) à l'expiration duquel le procédé de commande (300) est mis en oeuvre sur le dispositif de traitement associé (C0-C3), dans lequel le procédé de commande (300) comprend les étapes suivantes consistant à :
- sélectionner (320, 330) un programme (410-450) prêt à être exécuté sur le dispositif de traitement (C0-C3) et déterminer (325, 335) la période de temps qui est associée au programme sélectionné pour l'exécution ;
- comparer (340) si une fin de la période de temps prédéterminée se situe moins loin qu'une période de temps prédéterminée d'une expiration prévue d'un temporisateur (220, D0-D3, T0-T3) associé à un autre dispositif de traitement (C0-C3) et modifier (345) la période de temps prédéterminée si cela est le cas ;
- régler (350) le temporisateur ayant expiré (220, DO-D3, T0-T3) à la période de temps prédéterminée, et
- lancer (355) le programme sélectionné (410-450) sur le dispositif de traitement (C0-C3).

2. Procédé de commande (300) selon la revendication 1, dans lequel le programme prêt à être exécuté (410-450) est apte à être exécuté en temps réel et un système d'exploitation non apte à être exécuté en temps réel (510) est en outre prêt à être exécuté et dans lequel le programme apte à être exécuté en temps réel (410-450) et le système d'exploitation non apte à être exécuté en temps réel (510) sont alternativement sélectionnés lors d'exécutions consécutives du procédé de commande (300) sur le même dispositif de traitement (C0-C3).

3. Procédé de commande (300) selon la revendication 2, dans lequel les périodes de temps prédéterminées du système d'exploitation (510) et du programme apte à être exécuté en temps réel (410-450) se complètent en un temps de cycle qui est associé au dispositif de traitement (C0-C3).

4. Procédé de commande (300) selon l'une quelconque des revendications 1 à 3, dans lequel la modification de la période de temps prédéterminée, lorsqu'une fin de la période de temps prédéterminée se situe moins loin qu'une période de temps prédéterminée d'une expiration prévue d'un temporisateur (220, D0-D3, T0-T3) associé à un autre dispositif de traitement (C0-C3), comprend un décalage d'une quantité fixe (Δ).

5. Procédé de commande (300) selon l'une quelconque des revendications précédentes, comprenant en outre une étape préalable consistant à empêcher (310) d'autres appels au procédé de commande (300) et une étape finale consistant à permettre (355) d'autres appels au procédé de commande (300).

6. Procédé de commande (300) selon l'une quelconque des revendications précédentes, dans lequel à chaque dispositif de traitement (C0-C3) est associée une liste (400) dans laquelle sont introduits en tant qu'entrées les programmes (410-450) qui sont associés à ce dispositif de traitement (C0-C3), et dans lequel la sélection (320) s'effectue parmi les entrées de la liste (400).

7. Procédé de commande (300) selon la revendication 6, dans lequel chaque entrée comprend une priorité et la sélection (320) s'effectue en fonction des priorités.

8. Procédé de commande (300) selon la revendication 7, comprenant en outre l'étape consistant à introduire en entrée un programme (410-450) dans l'une des listes (400) sur la base d'une dernière utilisation d'au moins l'un des dispositifs de traitement (C0-C3).

9. Produit de programme informatique comportant des moyens à codes de programmes destinés à mettre en oeuvre le procédé de commande (300) selon l'une quelconque des revendications précédentes, lorsque le produit de programme informatique s'exécute sur un système informatique (110-150).

10. Produit de programme informatique selon la revendication 9 si il est stocké sur un support d'enregistrement lisible par ordinateur.

11. Système destiné à exécuter une pluralité de programmes (410-450) sur une pluralité de dispositifs de traitement (C0-C3), dans lequel le système comprend
- une pluralité de dispositifs de traitement (C0-C3), dans lequel un temporisateur (220, D0-D3, T0-T3) est associé à chaque dispositif de traitement (C0-C3) ;
- un procédé de commande (300) selon l'une quelconque des revendications précédentes, qui est mis en oeuvre sur l'un des dispositifs de traitement (C0-C3).

12. Système selon la revendication 11, dans lequel les dispositifs de traitement (C0-C3) font partie d'un circuit intégré (200).

13. Système selon la revendication 11 ou 12, dans lequel les temporisateurs (220, D0-D3, T0-T3) comprennent des compteurs (TO-T3) qui sont opérés par un signal d'horloge, dans lequel chaque compteur (TO-T3) déclenche une interruption dans le dispositif de traitement (C0-C3) qui lui est associé dès que le compteur (TO-T3) atteint une valeur prédéterminée.

14. Système selon la revendication 13, dans lequel chaque compteur comprend un diviseur programmable (DO-D3) destiné à diviser un signal d'horloge commun à tous les diviseurs en un signal d'horloge respectif associé à un compteur (T0-T3).
